# EUROPÄISCHE PATENTSCHRIFT

(11) **EP 3 061 335 B1**
(45) Veröffentlichungstag und Bekanntmachung des Hinweises auf die Patenterteilung: **14.02.2018**
(21) Anmeldenummer: 16157084.1
(22) Anmeldetag: 24.02.2016
(51) Int. Cl.: A01C 7/20, A01C 5/06

(54) **ENERGIESPEICHERANORDNUNG FÜR EINE AUSBRINGSCHAREINHEIT**
ENERGY STORAGE ASSEMBLY FOR AN APPLICATION COULTER UNIT
SYSTÈME DE STOCKAGE D'ÉNERGIE POUR UN ÉLÉMENT DE SEMOIR

(30) Priorität: 27.02.2015 DE 102015102890
(43) Veröffentlichungstag der Anmeldung: 31.08.2016
(73) Patentinhaber: Lemken GmbH & Co. KG, 46519 Alpen (DE)
(72) Erfinder: Gebbeken, Martin, 46519 Alpen (DE); Bergerfurth, Dennis, 46459 Rees (DE); Berendsen, Mark, 7044 AJ Lengel (NL) (NL); Geraats, Marcel, 41334 Nettetal (DE); Gotzen, Christian, 41751 Viersen (DE); Lukas, Thomas, 48683 Ahaus-Wüllen (DE); Paeßens, Christian, 47661 Issum (DE); Werries, Dieter, 46519 Alpen (DE); Heicks, Alois, 46487 Wesel (DE); van Kann, Andreas, 53949 Dahlem (DE)

(56) Entgegenhaltungen:
- FR-A- 1 212 442
- US-A- 4 766 962
- US-A- 5 529 128
- US-A- 5 555 824

## Beschreibung

Die Erfindung betrifft eine Energiespeicheranordnung für eine Ausbringschareinheit gemäß dem Oberbegriff des Patentanspruches 1.

Die deutsche Offenlegungsschrift DE 19 644 751 A1 beschreibt eine Säbalkenanordnung einer Verteilmaschine. Durch Drehen des Säbalkens um seine eigene Querachse in Verbindung mit einer annähernd parallelogrammartigen Scharführung mit Schar und Tiefenführungsrolle wird das Höhenverhältnis zwischen Schar und Tiefenführungseinrichtung zentral für alle Schare verändert. Über eine Zugfeder kann der Schardruck einzeln und individuell je Schar über eine Lochleiste verstellt werden.
Eine ähnliche Anordnung zeigt die US-Offenlegung US5555824A. Die Zugfeder wird über ein verschiebbares Widerlager in Stufen eingestellt. Das verschiebbare Widerlager kann über federbelastete Steckstifte arretiert werden.
In einer weiteren Druckschrift US4766962A wird eine drehbare Achse als Widerlager für Zugfedern vorgeschlagen, welches sich entlang einer Zahnstange bewegt und dort arretiert wird.

Aufgabe der Erfindung ist es, eine in ihrer Federkraft einstellbare Energiespeicheranordnung darzustellen, welche einfach, betriebssicher und gefahrlos sowie je Ausbringschareinheit individuell zu betätigen ist.
Diese Aufgabe wird durch die Merkmale des kennzeichnenden Teiles des Anspruches 1 gelöst. Durch Zuordnung eines Federelementes zu einer Rasteinheit eines Energiespeichers kann die Vorspannung des Energiespeichers gefahrlos erhöht werden, ohne dass ein Rastelement dafür entriegelt werden muss. Bei Verringerung der Vorspannung des Energiespeichers kann das Federelement in einem einzigen Handgriff selbsthaltend entriegelt werden, danach kann die Vorspannung des Energiespeichers vollständig entlastet werden, während sich das Federelement selbsthaltend in einer inaktiven Position befindet.

Im spannungsfreien oder spannungsarmen Zustand des Energiespeichers kann das Federelement wieder in eine aktive Rastposition gebracht und die Vorspannung des Energiespeichers wieder erhöht werden.

Jeweils vorteilhaft ist die Anordnung des Energiespeichers entweder zwischen Scharbalken und Ausbringschareinheit, zwischen Scharbalken und Tiefenführungseinrichtung und/oder zwischen Ausbringschareinheit und Tiefenführungseinrichtung. Für einen vereinfachten Zugang ist die Rasteinheit vorzugsweise im oberen Bereich des Energiespeichers angeordnet.
In Verbindung mit einem Exzenter kann die Energiespeichereinheit mit wesentlich höheren Vorspannkräften beaufschlagt werden. Trotzdem können die Rasteinrichtung und das Federelement, welche dem Exzenter zugeordnet sind, sehr kompakt gebaut werden.
Durch Ausstattung des Exzenters mit einem geeigneten Profilzapfen oder einer Profilausnehmung kann ein geeigneter, verlängerter Betätigungshebel auf oder in das Profil gesteckt werden, mit welchem entsprechend des Hebelverhältnisses hohe Betätigungskräfte oder -momente auf den Exzenter und somit auf den Energiespeicher aufgebracht werden können. Vier- oder Sechskantprofile ermöglichen den Einsatz eines handelsüblichen Schraubenschlüssels mit genormter Schlüsselweite.
Durch Ausbildung des Federelementes, beispielsweise als Federstahldrahtfeder mit zwei Schenkelenden, welche jeweils um eine einzelne, zueinander beabstandete Widerlagerachse rotieren, wird ein Schnappmechanismus realisiert, bei dem das Federelement in einer ersten Stellung frei und unwirksam von der Rasteinrichtung absteht und in einer zweiten Stellung selbsthaltend und federnd in die Rasteinrichtung eingreift und diese entgegen der Wirkrichtung des Energiespeichers sichert.
Durch geschickte Ausgestaltung des Federelementes in einen Bereich mit Schenkelenden, welche in die Widerlager eingreifen, einen zweiten Bereich, welcher in das Rastelement eingreift und einen dritten Bereich als Griffelement zur Betätigung des Federelementes, kann dieses einteilig und kostengünstig hergestellt werden.

Durch Anordnung zumindest einer Druckfeder mit zwei gegenläufigen Zugelementen, welche die Wirkung der Druckfeder in eine Zugbewegung konvertieren, erhält man eine Energiespeichereinheit, welche sich auch bei vollständiger Entlastung in einem definierten Bauraum bewegt und benachbarte Komponenten nicht berührt.
In einer sehr kompakten Bauweise werden die gegenläufigen Zugelemente innerhalb des inneren Druckfederdurchmessers verlaufend angeordnet. Dabei sind die Zugelemente einerseits mit einer Scharnieröse und an ihrem anderen Ende mit einem Anschlag versehen, welcher über den inneren Federdurchmesser hinausragt. Jeweils von einem Ende der Druckfeder werden die Zugelemente mit ihrer Ösenseite in den Innendurchmesser der Druckfeder eingeschoben, bis der Anschlag des Zugelementes am jeweiligen Federende anschlägt. Das Zugelement ist vorzugsweise in T- oder L-Form und als Gleichteil ausgeführt.
Durch Ausbildung des Energiespeichers in der Art, dass sowohl unter Last als auch ohne Last der Energiespeicher in einer gestreckten Lage verbleibt, agiert der Energiespeicher in einer rein linearen Bewegung, welcher ab einer bestimmten Dehnung eine innere Zug- oder Druckkraft erzeugt, welche linear durch eine Gerade bzw. die jeweiligen Auf- oder Gelenkpunkte des Energiespeichers verläuft.

Die Erfindung zeichnet sich insbesondere dadurch aus, dass eine Energiespeicheranordnung zur Schardruckerhöhung einer Ausbringschareinheit bereitgestellt wird, bei welcher über einen selbstrastenden Exzenter der Schardruck in kleinen Stufen erhöht werden kann, wobei der Exzenter mit einer Rasteinrichtung und einem Federelement zusammenwirkt, welches selbsthaltend in eine inaktive Stellung geschwenkt werden kann und den Energiespeicher vollständig entlastet.

Weitere Einzelheiten und Vorteile des Erfindungsgegenstandes ergeben sich aus der nachfolgenden Beschreibung und den zugehörigen Zeichnungen, in denen ein Ausführungsbeispiel mit den dazu notwendigen Einzelheiten und Einzelteilen dargestellt ist. Es zeigen:
Fig.1 eine perspektivische Darstellung eines Scharbalkens einer Verteilmaschine und
Fig.2 einen vergrößerten Ausschnitt aus Fig.1.

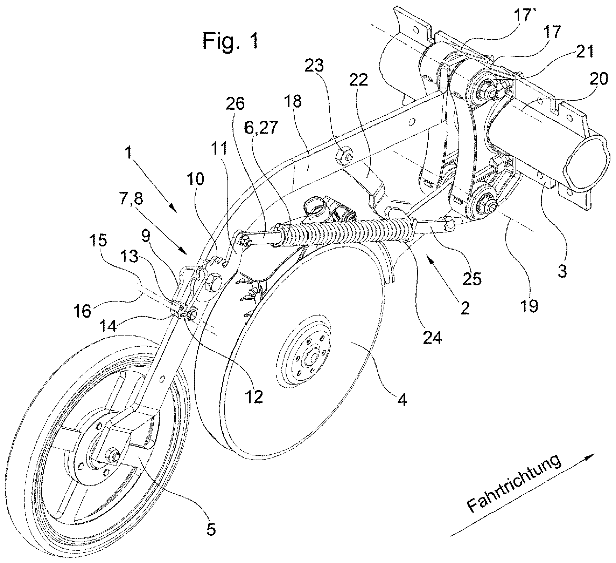

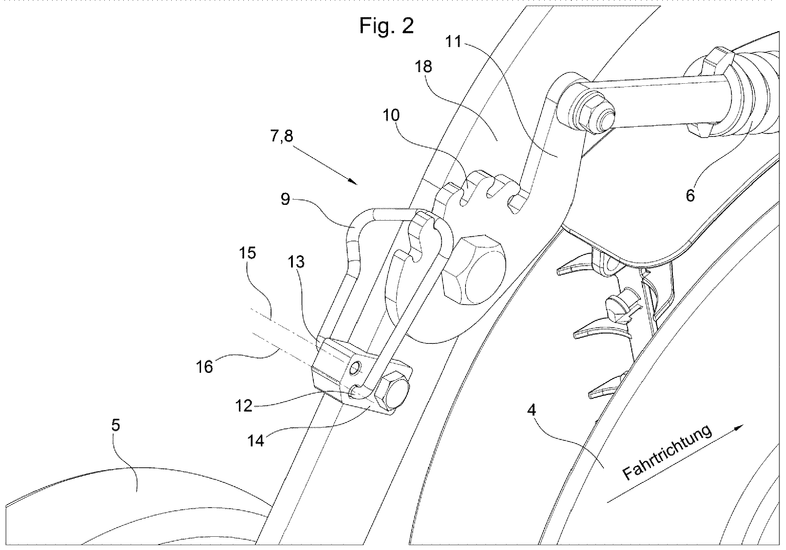

Figur 1 zeigt einen Scharbalken 3 einer landwirtschaftlichen Verteilmaschine, an welchem exemplarisch eine Ausbringschareinheit 4 befestigt ist. Entsprechend dem Lochbild des Scharbalkens 3 können mehrere Ausbringschareinheiten 4 nebeneinander als auch abwechselnd vor und hintereinander im sogenannten Scharschritt angeordnet und befestigt werden. Es sind verschiedenste Lagereinrichtungen zur schwenkbaren Aufnahme der Ausbringschareinheiten 4 als auch der Tiefenführungseinrichtungen 5, 18 denkbar, wie beispielsweise geklemmte Elastomerverbindungen, Gleitlager, Scharnierfedern oder Scharnierelemente. In diesem Beispiel sind zwei Lagerböcke 17, 17' nebeneinander am Scharbalken 3 angeflanscht. Jeweils oben und unten am Lagerbock 17, 17' befinden sich Lagerachsen 19, 20, welche jeweils von Lagern 21, vorzugsweise Elastomer- oder Gleitlagern durchzogen sind. Die Lager 21 bzw. die Lagerböcke 17, 17' bilden einen größeren Mittelspalt, in welchen an der unteren Seite die Scharführung 2 um die Lagerachse 19 und an der oberen Seite der Radarm 18 um die Lagerachse 20 jeweils vertikal schwenkbar mit einem Bolzen oder einer Klemmschraube befestigt sind. Weiter hinten am Radarm 18 und im Abstand zur Lagerachse 20 befindet sich eine Lagerstelle 23, ebenso im Abstand zu Lagerachse 19 eine weitere Lagerstelle 24 in der Scharführung 2. Zwischen der Lagerstelle 23 bzw. dem Radarm 18 und der Lagerstelle 24 bzw. der Scharführung 2 ist ein schwenkbarer Lenker 22 angeordnet, welcher mit dem Radarm 18 und der Scharführung 2 sowie dem Scharbalken 3 bzw. den daran geflanschte Lagerböcken 17, 17' ein Viergelenk bildet. An die Scharführung 2 schließt sich nach hinten ein Scharkörper als Ausbringschareinheit 4, hier ein rotierendes Doppelscheibenschar an, welches in Fahrtrichtung unter seinem Eigengewicht oder vertikalen Druck eine Rille zur Materialabgabe in den von der Verteilmaschine überfahrenen Boden zieht. Anstelle eines Doppelscheibenschares sind auch andere Scharformen wie Stiefel- oder Meißelschare oder Einscheibenschare denkbar. Am hinteren Ende des Radarmes 18 schließt sich eine Tiefenführungseinrichtung 5 in Form eines elastischen Stütz- oder Andruckrades an. Ebenso sind Schleifkufen als auch andere Tiefenführungselemente denkbar. Die Lagerpunkte 23 und 24 sind annähernd im gleichen Verhältnis oder etwa proportional beabstandet zu den Lagerachsen 20 und 19 wie der Abstand der Tiefenführungseinrichtung 5 zur Achse 20 und der Ausbringschareinheit 4 zur Achse 19. Durch dieses Verhältnis, welches eine Hebelübersetzung darstellt, schwenken sowohl die Tiefenführungseinrichtung 5 bzw. der Radarm 18 als auch der Scharkörper der Ausbringschareinheit 4 etwa parallel in der Höhe und relativ zur Bodenoberfläche nach oben und nach unten. Durch Neigen des Scharbalkens 3 um seine Querachse, welche horizontal zum Boden und quer zur Fahrtrichtung verläuft, kann mit dieser Viergelenkanordnung der Höhenabstand zwischen Ausbringschareinheit 4 und Tiefenführungseinrichtung 5 eingestellt werden, und zwar zentral für alle am Scharbalken 3 befestigten Ausbringschareinheiten 4. Der Lenker 22 wirkt in diesem Ausführungsbeispiel in Druck- und Zugrichtung. Es ist möglich, den Lenker 22 beispielsweise nur in Zugrichtung wirkend auszuführen, nämlich als Lenker mit einer Langlochlasche, als Knickstrebe oder als Kette, Band oder Seil. Dann kann die Tiefenführungseinrichtung 5 die Ausbringschareinheit 4 in Zugbelastung des Lenkers 22 in der Tiefe führen. Bei Auftreffen der Ausbringschareinheit 4 auf ein Hindernis kann diese zumindest für einen gewissen Hub nach oben ausweichen, ohne über den Lenker 22 die Tiefenführungseinrichtung 5 bzw. den Radarm entgegen seines Gewichtes oder seiner Trägheit nach oben zu werfen. Dies bewirkt einen ruhigen und exakten Scharlauf.
In der Nähe der unteren Lagerachse 19 ist der Energiespeicher 6 am Scharbalken 3 bzw. am Lagerbock 17 schwenkbar aufgehängt. Der Energiespeicher besteht aus zwei aneinander vorbei gleitenden Stäben 25, 26, welche jeweils über einen T-förmigen Endanschlag verfügen. Zwischen den beiden Anschlägen ist eine Druckfeder 27 positioniert, welche über das Längsprofil der Stäbe 25, 26 gleitet und durch diese in gestreckter oder linearer Lage geführt wird, egal, ob eine Belastung des Energiespeichers 6 bzw. der Druckfeder 27 vorliegt oder nicht. Das andere Ende des Energiespeichers 6 ist an einem Exzenter 11 aufgehängt, welcher schwenkbar am Radarm 18 angeordnet ist. Der Exzenter 11 verfügt über einen Sechskantprofilansatz, über den der Exzenter 11 mit einem handelsüblichen Schraubenschlüssel ohne großen Kraftaufwand schnell verdreht werden kann, auch entgegen der Wirkung des Energiespeichers 6. Statt eines Sechkantprofilansatzes sind andere Profile wie Vierkant oder Nutenprofile, ebenso aber auch verschieden geformte Ausnehmungen im Exzenter 11 möglich. Als praktikabel hat sich eine konzentrische Anordnung des Profilansatzes in Bezug auf die Schwenkachse des Exzenters 11 erwiesen. Die Arretierung des Exzenters 11 und somit der gesamten Einstelleinrichtung 7, bestehend aus Rasteinrichtung 8 und Exzenter 11, wird nachfolgend in Figur 2 beschrieben.
Figur 2 zeigt einen Detailbereich der Einstelleinrichtung 7 aus der zuvor beschriebenen Figur 1. Die Einstelleinrichtung 7 zur Vorspannung des Energiespeichers 6 und somit der Druckverstellung, welche zumindest auf die oben beschriebene Ausbringschareinheit 4 wirkt, besteht aus einem schwenkbaren Exzenter 11, welcher um eine Schwenkachse relativ zum Radarm 18 schwenkt und mit seinem Ende mit dem oberen Ende des Energiespeichers 6 verbunden ist. Durch eine Rasteinrichtung wird der Exzenter formschlüssig entgegen des Drehmomentes gesichert, was der Energiespeicher 6 auf den Exzenter 11 bewirkt. Die Rasteinrichtung besteht aus einem Rastelement 10, welches als Zahnsegmentausnehmung in die obere Exzenterkontur eingearbeitet ist sowie einem schwenkbaren Federelement 9, welches in das Rastelement formschlüssig eingreift. Dieses aus Federstahl gebogene Federelement 9 verfügt über zwei rückwärtige, abgewinkelte Schenkelenden 12, 13, welche in jeweils eine Ausnehmung eines Widerlagers 14 eingreifen und durch die seitliche Federwirkung selbsthaltend dort gegen Herausziehen gesichert sind. Die Ausnehmungen bilden zwei voneinander beabstandete Widerlagerachsen 15,16, um welche die Schenkelenden 12, 13 und somit das Federelement 9 schwenken. Das Widerlager 14 ist in Fahrrichtung hinter dem Exzenter 6 am Radarm 18 geflanscht. Eine Ausnehmung am Widerlager 14 passend zum Radarm 18 sichert den Formschluss des Widerlagers 14 und verhindert beispielsweise ein Abkippen in Fahrtrichtung. Ebenso können die Ausnehmungen bzw. die Widerlagerachsen direkt im Radarm eingebracht werden.

Durch den Abstand der Widerlagerachsen zueinander, welcher vorzugsweise kleiner als 25 mm ist, wird beim Schwenken des Federelementes 9 ein inneres Torsionsmoment erzeugt, welches durch eine passend geformte Neutrallage des Federelementes 9 ein Kippmoment des Federelementes 9 in Richtung des Rastelementes 10 des Exzenters 6 erzeugt. Das Federelement 9 greift durch dieses Kippmoment selbstsichernd in das Rastelement 10 ein. Durch schräge Anformung der Flanken des Rastelementes 10 kann eine einfach wirkende Selbstsicherung entgegen der Wirkung des Energiespeichers 6 erzielt werden. Wie bei einer Handbremse kann durch Drehen des Exzenters 11 der Schardruck durch Vorspannen des Energiespeichers in kleinen, reproduzierbaren Stufen erhöht werden. Hebt man das Federelement 9 am Exzenterende an, kann der Exzenter 11 frei zurückschwenken und entlastet den Energiespeicher 6. Dieser kann nun bei Bedarf wie zuvor beschrieben von neuem vorgespannt werden.
Schwenkt man das Federelement 9 um einen größeren Winkel zurück, wechselt das durch den Abstand der Widerlagerachsen 15, 16 und die Form des Federelementes 9 vorgegebene, innere Torsionsmoment von einer rechtsdrehenden in eine linksdrehende Richtung. Beträgt dieser Winkel beispielsweise über 45 Grad, verbleibt das Federelement 9 in einer selbsthaltenden, nach hinten geöffneten Stellung und gibt das Rastelement 8 des Exzenters 11 in beide Richtungen beweglich frei. Die Ausbringschareinheit 4 dringt nur noch mit ihrem Eigengewicht in den Boden ein. Trotz Entlastung des Energiespeichers 6 verbleibt dieser, wie oben unter Fig.1 beschrieben, in einer gestreckten und linearen Bewegungslage und verklemmt sich nicht beim Aufspringen der Ausbringschareinheit, wenn diese auf ein Hindernis trifft. Ebenso ist die maximale Länge des Energiespeichers 6 durch die innen liegenden Gleitelemente begrenzt, so dass beim Aushub der Verteilmaschine die Ausbringschareinheiten 4 nicht beliebig nach unten durchhängen.

**BEZUGSZEICHENLISTE**

| | |
|---|---|
| 1 | Energiespeicheranordnung |
| 2 | Scharführung |
| 3 | Scharbalken |
| 4 | Ausbringschareinheit |
| 5 | Tiefenführungseinrichtung |
| 6 | Energiespeichereinheit |
| 7 | Einstelleinrichtung |
| 8 | Rasteinrichtung |
| 9 | Federelement |
| 10 | Rastelement |
| 11 | Exzenter |
| 12 | Schenkelende |
| 13 | Schenkelende |
| 14 | Widerlager |
| 15 | Widerlagerachse |
| 16 | Widerlagerachse |
| 17 | Lagerbock |
| 18 | Radarm |
| 19 | Lagerachse |
| 20 | Lagerachse |
| 21 | Lager |
| 22 | Lenker |
| 23 | Gelenk |
| 24 | Gelenk |
| 25 | Stab |
| 26 | Stab |
| 27 | Druckfeder |

Es folgen zwei Blatt mit Zeichnung.

## Patentansprüche

1. Energiespeicheranordnung (1) für eine Scharführung (2) einer landwirtschaftliche Sä- oder Verteilmaschine, bestehend aus einem Scharbalken (3) mit daran seitlich im Abstand zueinander angeordneten Ausbringschareinheiten (4), wobei den Ausbringschareinheiten (4) eine Tiefenführungseinrichtung (5) zugeordnet ist, wobei die Ausbringschareinheit (4) höhenbeweglich mit dem Scharbalken (3) verbunden ist, wobei zwischen Scharbalken (3) und Ausbringschareinheit (4) oder zwischen Scharbalken (3) und Tiefenführungseinrichtung (5) oder zwischen Ausbringschareinheit (4) und Tiefenführungseinrichtung (5) zumindest eine dehnbare Energiespeichereinheit (6) angeordnet ist, welche über eine Einstelleinrichtung (7) verfügt, mit dem die Vorspannung der Energiespeichereinheit (6) manipuliert werden kann, wobei der Einstelleinrichtung (7) eine Rasteinrichtung (8) zugeordnet ist, welche in mehreren Positionen arretierbar ausgeführt ist, wobei die Rasteinrichtung (8) ein Federelement (9) beinhaltet, welches in einer ersten selbsthaltenden Stellung auf ein Rastelement (10) bewegungshemmend und in einer zweiten selbsthaltenden Stellung nicht auf das Rastelement (10) einwirkt,
**dadurch gekennzeichnet,**
**dass** das Federelement (9) zwei Schenkelenden (12, 13) aufweist, welche jeweils um eine Widerlagerachse rotieren, um zwischen der ersten selbsthaltenden Stellung und der zweiten selbsthaltenden Stellung zu schwenken, und welche beabstandet zueinander angeordnet sind.

2. Energiespeicheranordnung nach Anspruch 1,
**dadurch gekennzeichnet,**
**dass** der Energiespeichereinheit (6) ein Exzenter (11) zugeordnet ist, wobei dem Exzenter (11) die Rasteinrichtung (8) und das Federelement (9) zugeordnet sind.

3. Energiespeicheranordnung nach Anspruch 2,
**dadurch gekennzeichnet,**
**dass** der Exzenter (11) mit einem Einstellprofil versehen ist, welcher den Einsatz eines verlängerten, losen Einstellhebels ermöglichend ausgebildet ist.

4. Energiespeicheranordnung nach einem der vorstehenden Ansprüche,
**dadurch gekennzeichnet,**
**dass** das Federelement drei Bereiche aufweist, wobei ein erster Bereich die Schenkelenden (12, 13), welche in die Wiederlager (14) eingreifen, ein zweiter Bereich, welcher in das Rastelement (10) eingreift, und ein dritter Bereich ein Griffelement beinhaltet.

5. Energiespeicheranordnung nach einem der vorstehenden Ansprüche,
**dadurch gekennzeichnet,**
**dass** die Energiespeichereinheit (6) zumindest eine Druckfeder sowie zwei gegenläufige Zugelemente enthält, welche die Wirkung der Druckfeder in eine Zugbewegung konvertierend angeordnet sind.

6. Energiespeicheranordnung nach Anspruch 5,
**dadurch gekennzeichnet,**
**dass** die gegenläufigen Zugelemente innerhalb des inneren Druckfederdurchmessers verlaufend angeordnet sind.

7. Energiespeicheranordnung nach einem der vorstehenden Ansprüche,
**dadurch gekennzeichnet,**
**dass** die Energiespeichereinheit (6) unter Belastung als auch lastfrei in gestreckter Lage verbleibend ausgebildet ist.

## Claims

1. An energy storage assembly (1) for a coulter guide (2) of an agricultural sowing- or distribution machine, consisting of a coulter bar (3) with application coulter units (4) arranged laterally thereon at a distance from one another, wherein a depth guidance device (5) is associated with the application coulter units (4), wherein the application coulter unit (4) is connected in a height-adjustable manner with the coulter bar (3), wherein between coulter bar (3) and application coulter unit (4) or between coulter bar (3) and depth guidance device (5) at least one expandable energy storage unit (6) is arranged, which has an adjusting means (7), with which the pre-tensioning of the energy storage unit (6) can be manipulated, wherein a latching device (8) is associated with the adjusting means (7), which latching device is designed in such a manner as to be lockable in several positions,
wherein
the latching device (8) contains a spring element (9), which in a first self-retaining position acts in a movement inhibiting manner on a latching element (10) and in a second self-retaining position does not act in a movement inhibiting manner on the latching element (10),
**characterized in**
**that** the spring element (9) has two leg ends (12, 13), which in each case rotate about an abutment axis, in order to pivot between the first self-retaining position and the second self-retaining position, and
which are arranged spaced apart from one another.

2. An energy storage assembly according to Claim 1,
**characterized in**
**that** an eccentric (11) is associated with the energy storage unit (6), wherein the latching device (8) and the spring element (9) are associated with the eccentric (11).

3. An energy storage assembly according to Claim 2,
**characterized in**
**that** the eccentric (11) is provided with an adjusting profile, which is designed in such a manner as to make possible the use of an extended, loose adjusting lever.

4. An energy storage assembly according to any one of the preceding claims,
**characterized in**
**that** the spring element has three areas, wherein a first area contains the leg ends (12, 13), which engage in the abutment (14), a second area, which engages in the latching element (10),
and a third area contains a grip element.

5. An energy storage assembly according to any one of the preceding claims,
**characterized in**
**that** the energy storage unit (6) contains at least one pressure spring as well as two oppositely directed traction elements, which are arranged in a manner to convert the effect of the pressure spring into a pulling movement.

6. An energy storage assembly according to Claim 5,
**characterized in**
**that** the oppositely directed traction elements are arranged so as to run within the inner pressure spring diameter.

7. An energy storage assembly according to any one of the preceding claims,
**characterized in**
**that** the energy storage unit (6) is designed so as to remain under load as well as load-free in an extended position.

## Revendications

1. Agencement de stockage d'énergie (1) pour un guidage de soc (2) d'une machine agricole pour semer ou distribuer, composé d'une poutre de soc (3) avec des unités de soc d'épandage (4) qui y sont disposées latéralement de façon espacée les unes des autres, un dispositif de guidage en profondeur (5) étant affecté aux unités de soc d'épandage (4), l'unité de soc d'épandage (4) étant raccordée à la poutre de soc (3) de façon mobile en hauteur, au moins une unité de stockage d'énergie (6) extensible étant disposée entre la poutre de soc (3) et l'unité de soc d'épandage (4) ou entre la poutre de soc (3) et le dispositif de guidage en profondeur (5) ou entre l'unité de soc d'épandage (4) et le dispositif de guidage en profondeur (5) et disposant d'un dispositif de réglage (7) avec lequel la prétension de l'unité de stockage d'énergie (6) peut être manipulée, un dispositif d'encliquetage (8) étant affecté au dispositif de réglage (7) et étant réalisé de façon blocable dans plusieurs positions,
le dispositif d'encliquetage (8) contenant un élément à ressort (9) qui, dans une première position autoretenue, agit sur un élément d'encliquetage (10) en empêchant le mouvement et qui, dans une deuxième position autoretenue, n'agit pas sur l'élément d'encliquetage (10),
**caractérisé en ce que**
l'élément à ressort (9) présente deux extrémités de branche (12, 13) qui tournent respectivement autour d'un axe de butée pour pivoter entre la première position autoretenue et la deuxième position autoretenue, et qui sont disposées à distance l'une de l'autre.

2. Agencement de stockage d'énergie selon la revendication 1,
**caractérisé en ce**
**qu'**un excentrique (11) est affecté à l'unité de stockage d'énergie (6), le dispositif d'encliquetage (8) et l'élément à ressort (9) étant affectés à l'excentrique (11).

3. Agencement de stockage d'énergie selon la revendication 2,
**caractérisé en ce que**
l'excentrique (11) est muni d'un profilé de réglage qui est constitué en permettant l'introduction d'un levier de réglage lâche allongé.

4. Agencement de stockage d'énergie selon l'une des revendications précédentes,
**caractérisé en ce que**
l'élément à ressort présente trois zones, une première zone contenant les extrémités de branche (12, 13) qui engrènent dans les butées (14), une deuxième zone qui engrène dans l'élément d'encliquetage (10) et une troisième zone contenant un élément de poignée.

5. Agencement de stockage d'énergie selon l'une des revendications précédentes,
**caractérisé en ce que**
l'unité de stockage d'énergie (6) contient au moins un ressort de compression ainsi que deux éléments de traction opposés qui sont disposés en convertissant l'action du ressort de compression en un mouvement de traction.

6. Agencement de stockage d'énergie selon la revendication 5,
**caractérisé en ce que**
les éléments de traction opposés sont disposés en étant placés à l'intérieur du diamètre intérieur du ressort de compression.

7. Agencement de stockage d'énergie selon l'une des revendications précédentes,
**caractérisé en ce que**
l'unité de stockage d'énergie (6) est constituée en demeurant en situation d'extension sous charge ainsi que hors charge.
